# EUROPEAN PATENT SPECIFICATION

(11) **EP 1 974 183 B1**
(45) Date of publication and mention of the grant of the patent: **21.12.2011**
(21) Application number: 07709160.1
(22) Date of filing: 12.01.2007
(51) Int. Cl.: G01C 21/06, G08G 1/14

(54) **DEVICE AND METHOD FOR STORING THE POSITION OF A PARKED VEHICLE AND NAVIGATION DEVICE ARRANGED FOR THAT**
VORRICHTUNG UND VERFAHREN ZUM SPEICHERN DER POSITION EINES GEPARKTEN FAHRZEUGS UND DAFÜR AUSGELEGTE NAVIGATIONSEINRICHTUNG
DISPOSITIF ET PROCÉDÉ POUR ENREGISTRER LA POSITION D'UN VÉHICULE EN STATIONNEMENT ET DISPOSITIF DE NAVIGATION CONÇU À CET EFFET

(30) Priority: 18.01.2006 NL 1030943
(43) Date of publication of application: 01.10.2008
(73) Proprietor: TomTom International B.V., 1017 CT Amsterdam (NL)
(72) Inventor: GEELEN, Pieter, Andreas, NL-1017 CT Amsterdam (NL)
(74) Representative: Moore, Nicholas
(86) International application number: PCT/NL2007/050012
(87) International publication number: WO 2007/083997

(56) References cited:
- EP-A- 1 130 358
- EP-A- 1 256 784
- DE-A1-102004 043 177

## Description

### TECHNICAL FIELD

The present invention relates to a navigation device, a vehicle, comprising such a navigation device, and a method for storing the position of a parked vehicle. Also, the present invention relates to a computer program and a data carrier, comprising such a computer program.

### STATE OF THE ART

Prior art navigation devices based on GPS (Global Positioning System) are well known and are widely employed as in-car navigation systems. Such a GPS based navigation device relates to a computing device which in a functional connection to an external (or internal) GPS receiver is capable of determining its global position. Moreover, the computing device is capable of determining a route between start and destination addresses, which can be input by a user of the computing device. Typically, the computing device is enabled by software for computing a "best" or "optimum" route between the start and destination address locations from a map database. A "best" or "optimum" route is determined on the basis of predetermined criteria and need not necessarily be the fastest or shortest route.

The navigation device may typically be mounted on the dashboard of a vehicle, but may also be formed as part of an on-board computer of the vehicle or car radio. The navigation device may also be (part of) a hand-held system, such as a PDA.

By using positional information derived from the GPS receiver, the computing device can determine at regular intervals its position and can display the current position of the vehicle to the user. The navigation device may also comprise memory devices for storing map data and a display for displaying a selected portion of the map data.

Also, it can provide instructions how to navigate the determined route by appropriate navigation directions displayed on the display and/or generated as audible signals from a speaker (e.g. 'turn left in 100 m'). Graphics depicting the actions to be accomplished (e.g. a left arrow indicating a left turn ahead) can be displayed in a status bar and also be superimposed upon the applicable junctions/turnings etc. in the map itself.

It is known to enable in-car navigation systems to allow the driver, whilst driving in a car along a route calculated by the navigation system, to initiate a route re-calculation. This is useful where the vehicle is faced with construction work or heavy congestion.

It is also known to enable a user to choose the kind of route calculation algorithm deployed by the navigation device, selecting for example from a 'Normal' mode and a 'Fast' mode (which calculates the route in the shortest time, but does not explore as many alternative routes as the Normal mode).

It is also known to allow a route to be calculated with user defmed criteria; for example, the user may prefer a scenic route to be calculated by the device. The device software would then calculate various routes and weigh more favourably those that include along their route the highest number of points of interest (known as POIs) tagged as being for example of scenic beauty.

The object is to improve the state of the art navigation devices.

DE102004043177 describes an arrangement for locating a parked vehicle which comprises a mobile phone and a park detection circuit within the vehicle that communicates with the mobile phone. The mobile phone has a navigation unit with a position determination unit so that the phone user can be guided from his actual position to the transmitted position of the vehicle.

EP1130358 describes a navigation device which at least includes a CPU and a detector generating a detection signal for determining whether a main device is used inside a vehicle or not. If determining, based on the detection signal from the detector, that the main device is used inside the vehicle, the CPU operates in on-vehicle mode to carry out first navigation (present position estimation and route search) suitable for vehicles. Otherwise, the CPU operates in off-vehicle mode to carry out second navigation (present position estimation and route search) suitable for pedestrians. Thus, the navigation device can automatically switch its operation mode between on-vehicle mode and off-vehicle mode.

EP1256784 describes a car navigation apparatus for determining entry/exit of a vehicle into/from a parking area based on a running state of the vehicle without using a dedicated parking area database. Upon entry into a parking area, the entry is determined by totally checking the speed of the vehicle, the presence or absence of turn-round motion, an error in a forward and backward direction of the vehicle, estimated by map matching, the presence or absence of front and rear intersections, and the widths of intersecting roads. On the other hand, upon exit from a parking area, the exit is determined by totally judging the detected speed of the vehicle, the presence or absence of a straight running distance, the presence or absence of a nearby road extending in parallel with the course of the vehicle, and the width of the parallelly extending road.

### SHORT DESCRIPTION

An aspect of the claimed invention provides a navigation device as set out in the accompanying claims. Additional features and embodiments are described below.

According to an embodiment, the navigation device comprises a memory device and a positioning device, the processor unit being arranged to communicate with the memory device and the positioning device, and
- the information regarding the position of the parked vehicle is determined using the positioning device and
- the information regarding the position of the parked vehicle is stored in the memory device.

According to an embodiment, parking of a vehicle is detected by detecting that a connection or interaction between the navigation device and the vehicle and/or a docking system is broken. This is an easy and reliable way to determine parking of a vehicle. This may for instance be determined using any one of a release button, a proximity sensor, a contact sensor.

According to an embodiment, determining and storing information regarding the position of the parked vehicle using the positioning device is at least partially done after parking of a vehicle is detected. This information may be used to navigate back to the parked vehicle. This continued determination of positional data may be done using at least one of: accelerometer, gyroscope, inertia sensor.

According to an embodiment, the navigation device is arranged to
- retrieve the stored information regarding the position of the parked vehicle from the memory device and provide navigational instructions from a current position to the position of the parked vehicle.

According to an aspect, the invention relates to a vehicle, comprising a navigation device according to the above.

According to an aspect, the invention relates to a method for storing the position of a parked vehicle, comprising:
- detecting parking of a vehicle, and, when parking is detected,
- determining information regarding the position of the parked vehicle, and
- storing the information regarding the position of the parked.

According to an embodiment, the method comprises:
- retrieving the stored information regarding the position of the parked vehicle and
- providing navigational instructions from a current position to the position of the parked vehicle.

According to an aspect, the invention relates to a computer program, when loaded on a computer arrangement, arranged to perform the above method.

According to an aspect, the invention relates to a data carrier, comprising a computer program according to the above.

### SHORT DESCRIPTION OF THE DRAWINGS

Embodiments of the invention will now be described, by way of example only, with reference to the accompanying schematic drawings in which corresponding reference symbols indicate corresponding parts, and in which:
- Figure 1 schematically depicts a schematic block diagram of a navigation device,
- Figure 2 schematically depicts a schematic view of a navigation device,
- Figure 3 schematically depicts a side view of a navigation device according an embodiment,
- Figure 4 schematically depicts a side view of a navigation device according an embodiment,
- Fig.'s 5 and 6 schematically depict flow diagrams according to embodiments.

### DETAILED DESCRIPTION

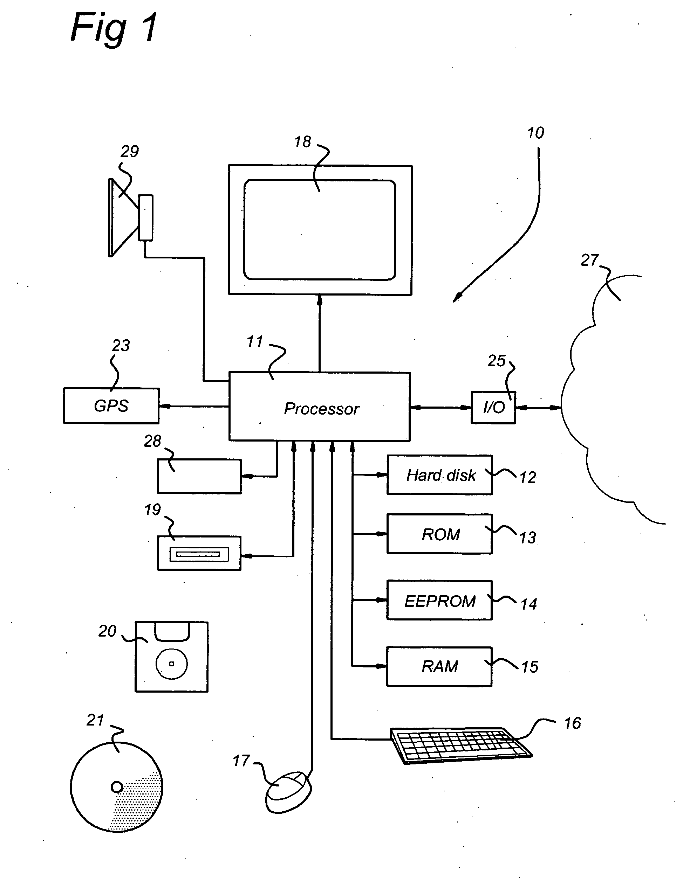

Figure 1 shows a schematic block diagram of an embodiment of a navigation device 10, comprising a processor unit 11 for performing arithmetical operations. The processor unit 11 is arranged to communicate with memory units that store instructions and data, such as a hard disk 12, a Read Only Memory (ROM) 13, Electrically Erasable Programmable Read Only Memory (EEPROM) 14 and a Random Access Memory (RAM) 15. The memory devices 12, 13, 14, 15 may comprise map data 22. This map data may be two dimensional map data (latitude and longitude), but may also comprise a third dimensions (height). The map data may further comprise additional information such as information about petrol/gas stations, points of interest. The map data may also comprise information about the shape of buildings and objects along the road.

The processor unit 11 may also be arranged to communicate with one or more input devices, such as a keyboard 16 and a mouse 17. The keyboard 16 may for instance be a virtual keyboard, provided on a display 18, being a touch screen. The processor unit 11 may further be arranged to communicate with one or more output devices, such as a display 18, a speaker 29 and one or more reading units 19 to read for instance floppy disks 20 or CD ROM's 21. The display 18 could be a conventional computer display (e.g. LCD) or could be a projection type display, such as the head up type display used to project instrumentation data onto a car windscreen or windshield. The display 18 may also be a display arranged to function as a touch screen, which allows the user to input instructions and/or information by touching the display 18 with his finger.

The speaker 29 may be formed as part of the navigation device 10. In case the navigation device 10 is used as an in-car navigation device, the navigation device 10 may use speakers of the car radio, the board computer and the like.

The processor unit 11 may further be arranged to communicate with a positioning device 23, such as a GPS receiver, that provides information about the position of the navigation device 10. According to this embodiment, the positioning device 23 is a GPS based positioning device 23. However, it will be understood that the navigation device 10 may implement any kind of positioning sensing technology and is not limited to GPS. It can hence be implemented using other kinds of GNSS (global navigation satellite system) such as the European Galileo system. Equally, it is not limited to satellite based location/velocity systems but can equally be deployed using ground-based beacons or any other kind of system that enables the device to determine its geographical location.

However, it should be understood that there may be provided more and/or other memory devices, input devices and read devices known to persons skilled in the art. Moreover, one or more of them may be physically located remote from the processor unit 11, if required. The processor unit 11 is shown as one box, however, it may comprise several processing units functioning in parallel or controlled by one main processor that may be located remote from one another, as is known to persons skilled in the art.

The navigation device 10 is shown as a computer system, but can be any signal processing system with analog and/or digital and/or software technology arranged to perform the functions discussed here. It will be understood that although the navigation device 10 is shown in Fig. 1 as a plurality of components, the navigation device 10 may be formed as a single device.

The navigation device 10 may use navigation software, such as navigation software from TomTom B.V. called Navigator. Navigator software may run on a touch screen (i.e. stylus controlled) Pocket PC powered PDA device, such as the Compaq iPaq, as well as devices that have an integral GPS receiver 23. The combined PDA and GPS receiver system is designed to be used as an in-vehicle navigation system. The embodiments may also be implemented in any other arrangement of navigation device 10, such as one with an integral GPS receiver/computer/display, or a device designed for non-vehicle use (e.g. for walkers) or vehicles other than cars (e.g. aircraft).

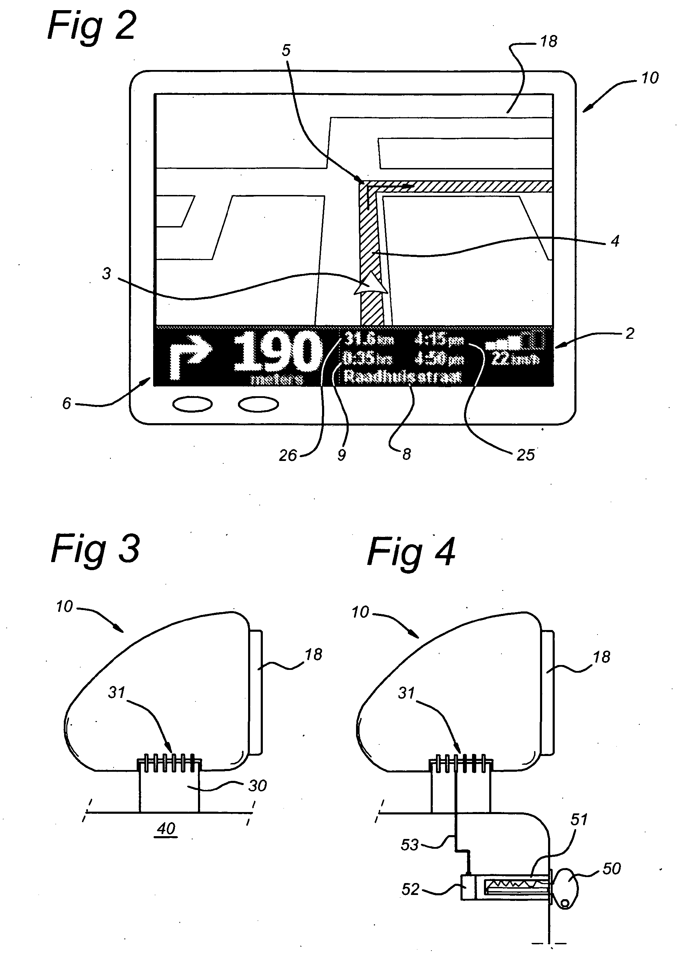

Figure 2 depicts a navigation device 10 as described above.

Navigator software, when running on the navigation device 10, causes a navigation device 10 to display a normal navigation mode screen at the display 18, as shown in Fig. 2. This view may provide driving instructions using a combination of text, symbols, voice guidance and a moving map. Key user interface elements are the following: a 3-D map occupies most of the screen. It is noted that the map may also be shown as a 2-D map.

The map shows the position of the navigation device 10 and its immediate surroundings, rotated in such a way that the direction in which the navigation device 10 is moving is always "up". Running across the bottom quarter of the screen may be a status bar 2. The current location of the navigation device 10 (as the navigation device 10 itself determines using conventional GPS location finding) and its orientation (as inferred from its direction of travel) is depicted by a position arrow 3. A route 4 calculated by the device (using route calculation algorithms stored in memory devices 11, 12, 13, 14, 15 as applied to map data stored in a map database in memory devices 11, 12, 13, 14, 15) is shown as darkened path. On the route 4, all major actions (e.g. turning corners, crossroads, roundabouts etc.) are schematically depicted by arrows 5 overlaying the route 4. The status bar 2 also includes at its left hand side a schematic icon depicting the next action 6 (here, a right turn). The status bar 2 also shows the distance to the next action (i.e. the right turn - here the distance is 50 meters) as extracted from a database of the entire route calculated by the device (i.e. a list of all roads and related actions defining the route to be taken). Status bar 2 also shows the name of the current road 8, the estimated time before arrival 9 (here 2 minutes and 40 seconds), the actual estimated arrival time 25 (11.36am) and the distance to the destination 26 (1.4Km). The status bar 2 may further show additional information, such as GPS signal strength in a mobile-phone style signal strength indicator.

As already mentioned above, the navigation device may comprise input devices, such as a touch screen, that allows the users to call up a navigation menu (not shown). From this menu, other navigation functions can be initiated or controlled. Allowing navigation functions to be selected from a menu screen that is itself very readily called up (e.g. one step away from the map display to the menu screen) greatly simplifies the user interaction and makes it faster and easier. The navigation menu includes the option for the user to input a destination.

The actual physical structure of the navigation device 10 itself may be fundamentally no different from any conventional handheld computer, other than the integral GPS receiver 23 or a GPS data feed from an external GPS receiver. Hence, memory devices 12, 13, 14, 15 store the route calculation algorithms, map database and user interface software; a processor unit 12 interprets and processes user input (e.g. using a touch screen to input the start and destination addresses and all other control inputs) and deploys the route calculation algorithms to calculate the optimal route. 'Optimal' may refer to criteria such as shortest time or shortest distance, or some other user-related factors.

More specifically, the user inputs his start position and required destination into the navigation software running on the navigation device 10, using the input devices provided, such as a touch screen 18, keyboard 16 etc. The user then selects the manner in which a travel route is calculated: various modes are offered, such as a 'fast' mode that calculates the route very rapidly, but the route might not be the shortest; a 'full' mode that looks at all possible routes and locates the shortest, but takes longer to calculate etc. Other options are possible, with a user defining a route that is scenic - e.g. passes the most POI (points of interest) marked as views of outstanding beauty, or passes the most POIs of possible interest to children or uses the fewest junctions etc.

Roads themselves are described in the map database that is part of navigation software (or is otherwise accessed by it) running on the navigation device 10 as lines - i.e. vectors (e.g. start point, end point, direction for a road, with an entire road being made up of many hundreds of such sections, each uniquely defined by start point/end point direction parameters). A map is then a set of such road vectors, plus points of interest (POIs), plus road names, plus other geographic features like park boundaries, river boundaries etc, all of which are defined in terms of vectors. All map features (e.g. road vectors, POIs etc.) are defined in a co-ordinate system that corresponds or relates to the GPS co-ordinate system, enabling a device's position as determined through a GPS system to be located onto the relevant road shown in a map.

Route calculation uses complex algorithms that are part of the navigation software. The algorithms are applied to score large numbers of potential different routes. The navigation software then evaluates them against the user defined criteria (or device defaults), such as a full mode scan, with scenic route, past museums, and no speed camera. The route which best meets the defined criteria is then calculated by the processor unit 11 and then stored in a database in the memory devices 12, 13, 14, 15 as a sequence of vectors, road names and actions to be done at vector end-points (e.g. corresponding to pre-determined distances along each road of the route, such as after 100 meters, turn left into street x).

Navigation devices are often used in vehicles, such as cars, motorcycles etc., to provide a driver with instructions to navigate to a destination. However, often it is not possible to reach the destination with the vehicle used. When going to a theatre by car, the car is often parked at a considerable distance from the theatre, for instance in a parking garage or parking place. Also, when paying a visit to a city centre or making a walk in the forest, the car is parked at a certain location, while the rest of the journey/visit is done by foot. Many examples can be thought of in which a user leaves his/her vehicle and continues his/her journey by foot or using an other type of transportation, such as a bike, a local bus or a train, taking along the navigation device.

According to an embodiment, a navigation device is provided that detects and stores the position where a vehicle is parked.

According to an embodiment, the navigation device is arranged to be used in a vehicle, such as a car. Such a navigation device may therefore be equipped to connect or interact with the car. This connection or interaction may be physical, for instance via a docking system or via a power supply connection, but may also be a wireless connection link with parts of the car. This connection or interaction may be used by the navigation device 10 to detect a parking position of a vehicle.

### Docking system

The navigation device 10 may for instance be arranged to be docked in a docking system 30, such as a cradle. According to an embodiment, the navigation device 10 is arranged to detect that it is docked in the docking system 30. Therefore, the navigation device 10 is arranged to detect a parking position of a vehicle, by detecting the geographical position where the navigation device 10 is un-docked, i.e. where the connection or interaction with the vehicle and/or the docking system 30 is broken.

Fig. 3 schematically depicts a side view of a navigation device 10 that is docked in a docking system 30. The docking system 30 may be formed as part of a dashboard 40 of a vehicle or the docking system 30 may be arranged to be connected to a dashboard 40 of a vehicle (not shown). The docking system 30 may however also be a removable docking system that may be attached to a surface, such as a window, using a suction cup.

In between the navigation device 10 and the docking system 30, connectors 31 are running to provide a physical connection between the navigation device 10 and the vehicle. These connectors 31 may be electrical connectors. Many different connectors may be conceived and used, as will be understood by a skilled person.

The connectors 31 may comprise a connector (or line) that provides a permanent power supply from a battery and a connector (or line) that provides information about ignition power, which is on only when the ignition of the vehicle is switched on.

The navigation device 10 may be arranged to receive (electrical) power from the car via the connectors 31, for instance from a (storage) battery from the car. The navigation device 10 may also comprise electrical connectors to establish a one or two-way communication link between the navigation device 10 and the car.

In case a one way communication link is used, the navigation device 10 may for instance receive input from the vehicle, such as ignition status, light status.

Based on the above examples, the navigation device 10 is arranged to detect whether or not the navigation device 10 is docked in the docking system 30. For instance, when the navigation device 10 detects that (electrical) power is no longer fed to the navigation device 10 via one of the connectors 31, when the connection is broken, the navigation device 10 may store the current position of the navigation device 10 as measured by the positioning device 23 in the memory devices 12, 13, 14, 15 and may label it as "position parked vehicle". Or the navigation device 10 may store the last available information about the position of the navigation device 10 as measured by the positioning device 23 as 'parked position' if the position was lost before ignition went off (useful in underground parking).

Also, when the navigation device 10 detects that the one or two way communication link is no longer present via the connectors 31, the navigation device 10 may store the current position of the navigation device 10 as measured by the positioning device 23 in the memory devices 12, 13, 14, 15.

So, when a driver parks his/her vehicle and continues his/her journey without the vehicle, the driver undocks the navigation device 10. This is sensed by the navigation device 10 and the navigation device 10 measures the current position of the vehicle/navigation device 10 using the positioning device 23 and stores the measured position in the memory devices 12, 13, 14, 15. This position may be labelled as "position parked vehicle".

According to an embodiment, the interaction between the navigation device 10 and the vehicle may be wireless communication. According to such an embodiment, parking of a vehicle may be determined when the wireless communication link is broken, or the signal strength drops below a certain predetermined threshold. When the wireless communication link is broken or has dropped below the threshold, the navigation device 10 could conclude that it is undocked.

Also, the navigation device 10 may also check whether it is wirelessly docked to the same vehicle. Once it detects that it is wirelessly docked to another vehicle, the navigation device 10 may detect parking of a vehicle (the previous vehicle).

### Switch off

According to an embodiment, the navigation device 10 may be arranged to store the latest available position as measured by the positioning device 23 as "position parked vehicle", when the navigation device 10 is switched off. When a user parks his/her vehicle and continues its journey by foot, he/she will often turn off the navigation device 10 to take it along. According to this embodiment, the navigation device 10 stores this position as "position parked vehicle". This allows the user to easily navigate back to his/her vehicle as will be explained below.

According to this embodiment, the navigation device 10 doesn't need to be docked during the journey and undocked when the vehicle is parked. The navigation device 10 remembers the last position where it was last switched on.

Based on the above, it will be understood that a navigation device 10 using a combination of detecting an un-docking operation and switch off will be successful when a users parks his/her vehicle, turns off the navigation device 10 an undocks the navigation system 10, in arbitrary order.

### Ignition detection

According to an alternative, the navigation device 10 may for instance be arranged to detect ignition of the vehicle. In order to do this, the vehicle may be provided with an ignition detector unit 52 that may be positioned in the vicinity of a keyhole 51 arranged to receive an ignition key 50. Navigation devices 10 are already known that can detect whether the ignition of a vehicle is on or off. It will be understood that this doesn't mean that the engine of the vehicle is working, but if ignition is off, the engine is also off.

Such an ignition detector 52 may be arranged to detect when the ignition is switched off, for instance based on the orientation of the ignition key 50, or by sensing if current and/or voltage is present at a certain place in the circuitry. According to a further alternative, the ignition detector 52 may simply be a detector arranged to detect the presence of the ignition key 50 in the keyhole 51, for instance using a capacitive or inductive sensor that senses the presence of the ignition key 50 in its vicinity.

Information regarding the ignition or presence of the ignition key 50 may be communicated to the navigation device 10 via a communication link 53. This may be a wired communication link 53, as schematically depicted in Fig. 4, but may also be a wireless communication link.

So when the ignition of a vehicle is turned off or the ignition key 50 is removed, the navigation device 10 is triggered via communication link 53 to measure the current position of the vehicle/navigation device 10 using the positioning device 23 and store the measured position in the memory devices 12, 13, 14, 15 and label it as "position parked vehicle".

### Release button

It will be understood that the navigation device 10 may also detect whether or not it is docked in alternative ways. For instance, the navigation device 10 may comprise a release button on the outside that is pressed by the docking system 30 when the navigation device 10 is docked and released when the navigation device 10 is undocked. Based on the position of the release button, the navigation device 10 may determine whether or not it is docked. Once the navigation device 10 senses that it is undocked, it may store the current position in the memory device 12, 13, 14, 15 and label it as "position parked vehicle".

Also, the navigation device 10 may be connected to the docking system 30 by a click-mechanism. Therefore, the navigation device 10 may comprise a release button that is to be pressed by a user to mechanically release the navigation device 10 from the docking system 30.

Pressing this release button may also trigger the navigation device 10 to measure the current position of the vehicle/navigation device 10 using the positioning device 23 and store the measured position in the memory devices 12, 13, 14, 15 and label it as "position parked vehicle".

Of course, instead of a release button, many variations may be conceived, such as a proximity sensor that measures whether or not the navigation device 10 is in the proximity of the docking system 30 or not. Also, a contact sensor may be used, that measures whether or not the navigation device 10 is in contact with the docking system 30 or not. Such sensors may be used to detect parking of a vehicle, when the navigation sensor is moved out of the proximity of the docking system 30 or contact with the docking system 30 is broken.

### Analysis positioning data

According to a further embodiment, the navigation device 10 is arranged to determine the position where a vehicle is parked based on analysing the position information as measured by the positioning device 23. So, when the navigation device 10 is undocked, but not switched off, the navigation device 10 may detect how the navigation device 10 is moving after parking. Based on this analysis, the navigation device 10 may determine if the user is for instance moving by car or by foot. When the navigation device 10 determines that the user has changed from moving by car to moving by foot, the navigation device 10 may store the position where the user has changed from car to foot in the memory device 12, 13, 14, 15 and label it as "position parked vehicle".

For instance, the navigation device 10 may compare the position of the navigation device 10 as measured by the positioning device 23 with map data stored in the memory device 12, 13, 14, 15. Based on such an analysis, the navigation device 10 may determine that the user is moving over a path that is stored as being a foot path. Based on this, the navigation device 10 determines that the user is most likely travelling by foot.

The navigation device 10 may also be arranged to determine whether the user is travelling by foot or by car, solely based on position information as measured by the positioning device 23, for instance based on measured speed, amount of turns etc. For instance, if the speed drops below 5 km/h, the navigation device 10 may conclude that the user is travelling by foot and no longer by car. Also, if the navigation device 10 measures a relatively high number of sharp turns, the navigation device 10 may conclude that the user is travelling by foot and no longer by car. The navigation device 10 may detect parking of a vehicle by analysing at least one of: the speed of the navigation device 10, the amount of bends, the sharpness of bends.

Based on this embodiment, the navigation device 10 is arranged to determine a position where a user switches from a first way of transportation (e.g. car), to a second way of transportation (e.g. foot or bicycle) based on positional data as measured by the positioning device 23 and possibly map data stored in the memory device 12, 13, 14, 15 and store the position of the switch in the memory device 12, 13, 14, 15 labelled as "position parked vehicle".

### Loss of signal by the positioning device

According to a further embodiment, the navigation device 10 is arranged to detect a parking position of a vehicle when the vehicle is parked in a parking garage, as for instance an underground parking garage or an indoor parking garage. In such a parking garage, the positioning device 23 may loose its signal, such as for instance a GPS signal. Where the term GPS is used, it will be understood that also other positioning systems and positioning signals may be used.

The navigation device 10 may be arranged to store the position where the last valid GPS-signal is measured in the memory devices 12, 13, 14, 15 and label it as the "position parked vehicle". When the user wants to return to its vehicle, the navigation device 10 can retrieve this position from the memory device 12, 13, 14, 15 and navigate the user to the entrance of the parking garage.

Of course, GPS signal may also be lost in other circumstances, for instance when the navigation device 10 enters a tunnel. Also, GPS signal may be lost as a result of other causes, such as bad weather conditions. In these cases, the navigation device 10 may wrongly store the position where the last valid GPS-signal is measured in the memory devices 12, 13, 14, 15 and wrongly label it as the "position parked vehicle".

In order to prevent incorrect storage of a "position parked vehicle", the navigation device 10 may be arranged to only detect parking of a vehicle and storage of a "position parked vehicle" when the positioning device 23 looses its signal and the velocity of the vehicle is below a predetermined threshold. By using such a velocity threshold, the navigation device 10 will not detect parking of a vehicle when the vehicle enters a tunnel at the motorway (with a relatively high velocity), and will detect parking of the vehicle when the vehicle enters an underground parking garage or an indoor parking garage.

The above may not work in case the vehicle is in a traffic jam and enters a tunnel. However, the navigation device 10 may communicate with a traffic server and the navigation device 10 may not detect parking of the vehicle if the last measured position of the navigation device 10 coincides with a reported traffic jam and the vehicle is not moving or moving slowly.

However, incorrect detection of parking of a vehicle doesn't negatively influence the performance of this embodiment, because once the user actually parks his/her vehicle at a later stage inside a parking garage, the previously wrongly stored "position parked vehicle" will be overwritten by the navigation device 10 with the correct "position parked vehicle", being the position of the entrance of the parking garage.

According to a further embodiment, the navigation device 10 is arranged to detect and store the position where it picked up a GPS signal after having lost it, and store this as "position parked vehicle", as this position will probably be the pedestrian exit/entrance of the parking garage. According to this embodiment, the user is guided back to the pedestrian exit/entrance of the parking garage, which is usually much more convenient then the vehicle entrance.

In this case, the navigation device 10 may be arranged to measure the time interval between the loss of the GPS signal and the pick-up of the GPS signal. The navigation device 10 may be arranged to only store the position where the GPS signal is picked up again, if the time interval between loss and pick-up is within a certain predetermined "safety time interval". The time interval should not be too big, for instance 10 minutes. Also, the position of the picked up GPS signal is preferably within a certain distance from the position where the GPS signal was lost.

According to a further embodiment, the navigation device 10 is arranged to compare the stored "position parked vehicle" with map data stored in the memory devices 12, 13, 14, 15 to see if the stored "position parked vehicle" coincides with the location of a parking garage comprised in the map data. If so, the navigation device 10 may retrieve the location of the pedestrian exit/entrance of the parking garage from the map data, and store this position as the "position parked vehicle", to navigate the user back to the pedestrian entrance/exit of the parking garage.

Also, the positioning device 23 may comprise further positioning devices, such as an accelerometer/gyroscope/inertia sensor/etc. to measure positional data in between loss of the signal by the positioning device 23 subsequent pick up of the signal by the positioning device 23. This information may be used to derive the position of the parked vehicle inside the underground parking garage or indoor parking garage.

If 'position parked vehicle' has been derived using accelerometer/gyroscope/inertia sensor/etc. the navigation device 10 may continue to use the accelerometer/gyroscope/ inertia sensor/etc. to detect a user's trajectory until the positioning device 23 picks up a valid signal, such as a valid GPS signal. The detected trajectory may be stored in the memory devices 11, 12, 13, 14, 15 to provide the user with instructions to navigate back to the vehicle, as will also be explained below.

The recorded data/trajectory may be played back to guide user to the car in places where GPS signal is not available (underground parking, for example).

### Flow diagram

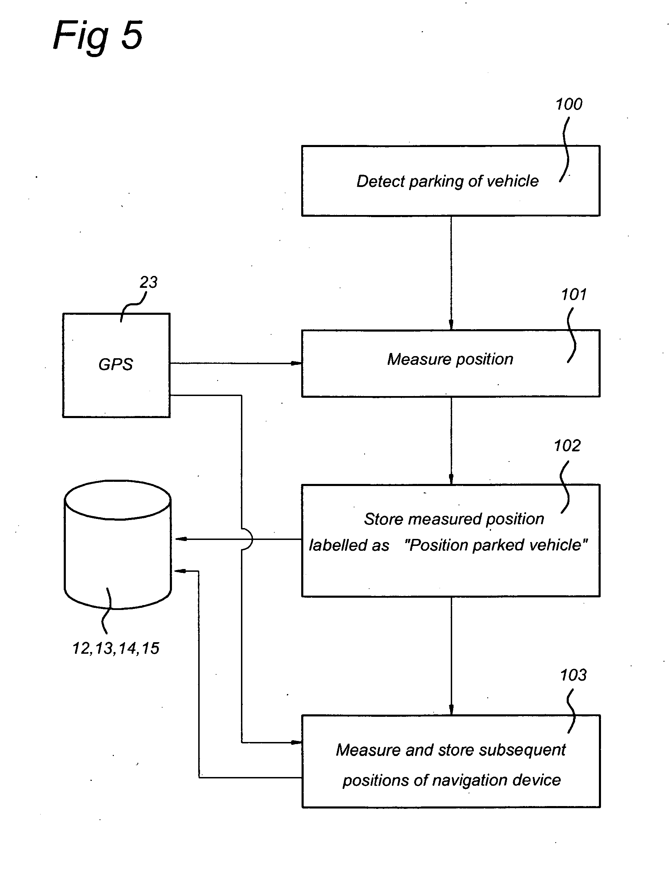

Fig. 5 schematically depicts a flow diagram, showing the actions as may successively be executed by the navigation device 10 according to the embodiment described above with reference to Fig.'s 3 and 4. In a first action 100, the navigation device 10 detects that the vehicle is parked. This may be done in many different ways, for example, as discussed above, such as detecting that the navigation device 10 is undocked, detecting that ignition is switched off, detecting that ignition key is removed, detecting that a GPS signal is lost, etc.

When parking of a vehicle is detected, in a next action 101, the navigation device 10 controls positioning device 23 to measure the position of the vehicle, for instance using GPS. Of course, such a positioning device 23 may be in a modus in which it measures the position continuously or at regular intervals. In that case, the navigation device 10 does not need to instruct the positioning device 23 to perform a measurement, but may simply read out the latest position measurement as performed by the positioning device 23.

In a next action 102, the navigation device 10 stores the position that is determined in action 101 in memory device 12, 13, 14, 15 and label the position as "position parked vehicle". Of course, the position doesn't need to be literally labelled as "position parked vehicle", it will be understood that any suitable label may be used.

### Recording after parking

After the navigation device 10 has stored a position in the memory device 12, 13, 14, 15 labelled as "position parked vehicle", the navigation device 10 may continue recording the position of the navigation device 10 (if not switched off) and store it in memory device 12, 13, 14, 15. This is depicted in Fig. 5 with action 103, which is an optional action.

This continuous recording of the subsequent positions of the navigation device 10 may be used to navigate back to the "position parked vehicle" without using map data, by guiding the user back to the vehicle along the continuous stored positions. Thus, the user is guided back to his/her vehicle via the same route he/she followed away from his/her vehicle. This may be useful when the user continues his/her journey in an area wherein no map data is available or in cases where the navigation device 10 is not arranged to compute a route based on map data stored in the memory device 12, 13, 14, 15, but is only a map viewing device. Navigation back to the position of the parked vehicle may be done in several ways, as will be discussed in more detail below.

Of course, the continuous recording of positions of the navigation device 10 after storing the "position parked vehicle", may be done using the positioning device 23, using GPS measurements. However, the positioning device 23 may also use other techniques. The positioning device 23 may for instance also comprise an accelerometer/gyroscope/inertia sensor/etc. Of course, the positioning device 23 may also comprise a combination of different positioning techniques.

Also, the continuous recording of position of the navigation device 10 after storing the "position parked vehicle", may be done by the navigation device 10 even when it is in a sleep modus. Such a sleep modus may be a modus in which a CPU frequency of the processing unit 11 may be lowered in order to safe energy.

According to an embodiment, measurements performed by an accelerometer/gyroscope/ inertia sensor/etc. may be stored and used to guide a user back to his/her parked vehicle, in situations where no GPS signal is available in the vicinity of the parking position, such as for instance in a parking garage.

### Navigate back

When a user wants to return to his/her vehicle, it may do so by instructing the navigation device 10 to navigate to the "position stored vehicle" as stored in the memory device 12, 13, 14, 15. The user may for instance trigger the navigation device 10 to navigate to the "position parked vehicle", by selecting a special option in a menu, for instance indicated with "find vehicle".

By selecting such a menu option, the navigation device 10 retrieves the "position parked vehicle" from the memory device 12, 13, 14, 15 and facilitates navigating to this position. The navigation to the "position parked vehicle" may be done in many different ways, of which a few will be discussed here by way of example.

According to an embodiment, the navigation device 10 may be arranged to navigate the user to the "position parked vehicle" by using the current position of the navigation device 10 as a start position and the "position parked vehicle" as a required destination. Navigation software that is running on the navigation device 10 may then apply route calculation (see above) to compute a route from the start position to the "position parked vehicle" using map data stored in the memory device 12, 13, 14, 15, as will be known by a skilled person.

The navigation device 10 may be arranged to provide the user with the option to select a way of transportation (foot, bicycle...) to travel from the current position to the "position parked vehicle". However, when a user has selected the menu option "find vehicle", the navigation device 10 may automatically choose a way transportation, for instance by foot.

According to a further embodiment, the current position of the navigation device is in an area of which no detailed map data is stored, i.e. where no road vectors, etc are available to compute route calculation on. In that case the navigation device 10 is not able to compute a route from the current position to the "position parked vehicle" when the user selects the menu option "find vehicle". Therefore, the navigation device 10 may be arranged to show the current position on the map, together with the "position parked vehicle" and/or an indication of the direction in which the user should travel to reach the "position parked vehicle".

According to an embodiment, the navigation device 10 is arranged to guide the user back from the current position of the navigation device 10 to the "position parked vehicle", by playing back the subsequent positions of the navigation device 10 as recorded in the memory device 12, 13, 14, 15 after storing the "position parked vehicle" (see action 103 in Fig. 5). This may be a useful embodiment in cases when no detailed map data are available. The user may for instance be guided along the recorded subsequent positions of the navigation device 10 by showing an arrow on the display 18, indicating the direction to the next recorded position.

According to a further embodiment, the current position of the navigation device 10 is in an area where no GPS signal can be received. For instance, the user may be in a forest or a shopping mall, where no clear GPS signal is received. Also, the vehicle may be parked in an underground parking garage. In this case, the navigation device 10 may use measurements as recorded by an accelerometer as described above to guide the user from the current position to the "position parked vehicle".

According to an embodiment, the navigation device 10 doesn't comprise route calculation software, and is only a map viewing device, comprising a position device 23. Such a navigation device 10 may be used to display the current position of a user on the display 18 together with the "position parked vehicle" when the user selects the menu option "find vehicle".

### Flow diagram

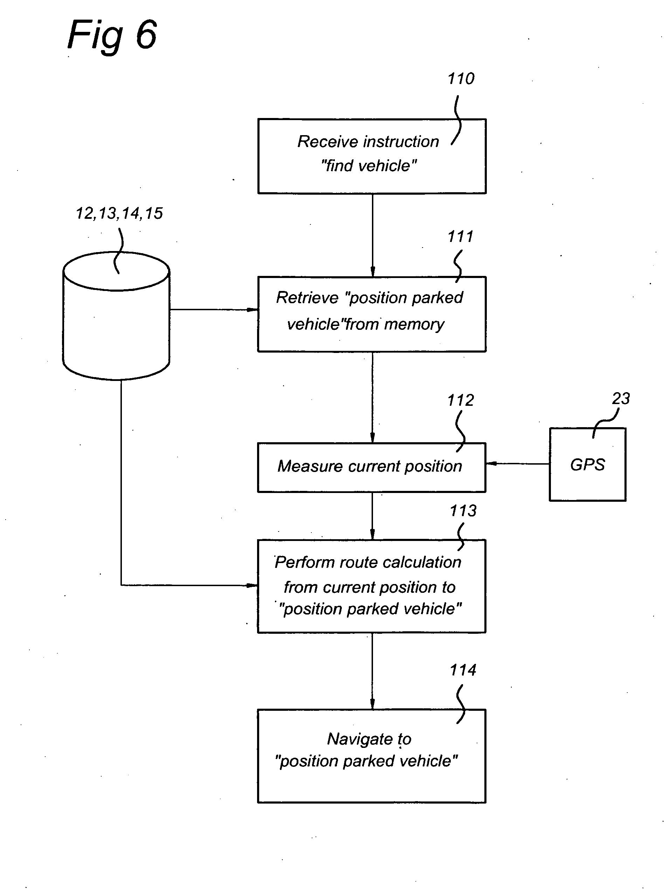

Fig. 6 schematically depicts a flow diagram, showing the actions as may successively be executed by the navigation device 10 according to the embodiments described above with respect to navigating back to the "position parked vehicle".

In a first action 110, the processing unit 11 receives an instruction to navigate back to the vehicle, for instance in the form of an instruction "find vehicle". Once the processing unit 11 receives this instruction, it retrieves the stored "position parked vehicle" from the memory device 12, 13, 14, 15 in action 111.

In a next action 112 it instructs the positioning device 23 to measure the current position of the navigation device 10. Of course, the positioning device 23 may be arranged to continuously measure the position of the navigation device 10, or at regular time intervals. In that case, the navigation device 10 doesn't need to instruct the positioning device to measure the current position, but may simply read out the latest position measurement as performed by the positioning device 23.

Based on the current position of the navigation device 10 (start position) and the "position parked vehicle" (destination) the navigation device 10 may compute a route to the "position parked vehicle" using route calculation, as will be known to a skilled person.

Of course many variations are conceivable. A navigation device 10 may for instance perform the actions as depicted in Fig.'s 5 and 6 in a different order.

### Further remarks

When a user parks his/her vehicle and continues his/her journey without the vehicle, he/she removes the navigation device 10 from the vehicle to take it along. As soon as the navigation device 10 detects that the vehicle is parked, the navigation device 10 determines the current position of the navigation device 10 using the positioning device 23, and stores that position in the memory devices 12, 13, 14, 15. This position may for instance be labelled as "position parked vehicle".

The navigation device 10 may detect that the car is parked, because it detects that it is removed from a docking system 30, or detects that the ignition is off, etc.

It will be understood that it is not a problem if the navigation device 10 is wrongly triggered to store a certain position as "position parked vehicle" (for instance when the navigation device is undocked during a journey), as long as the wrongly stored "position parked vehicle" is overwritten at a later time with a correct "position parked vehicle".

When the user of the navigation device 10 wants to find back his/her car, he/she triggers the navigation device 10 to retrieve the "position parked vehicle" from the memory device 12, 13, 14, 15 and start navigating to that position. The user may for instance trigger the navigation device 10 to navigate to the "position parked vehicle", by selecting a special option in a menu, for instance indicated with "find vehicle".

It will be understood that the term vehicle as used in this text may refer all kinds of transportation, such as cars, motorcycles, bicycles etc.

It will further be understood that the navigation device may be loaded with a computer program to perform one or more of the embodiments described above. The computer program may comprise instructions readable by the processing unit 11 that control the processing unit 11 to perform one or more of the embodiments described above.

According to a further embodiment, the navigation device 10 may comprise a "manual"position store mode. Such a modus provides the user via the user interface (e.g. via display 18), with the option to store the current position of the navigation device 10 as measured by the positioning device 23, and label it as "position parked vehicle". The navigation device 10 may for instance provide a virtual button via a touch screen. This may be done, even when the ignition is switched on and/or the navigation device 10 is docked.

According to an embodiment, the navigation device 10 may be arranged to store a number of last "positions parked vehicle" in memory device 12, 13, 14, 15 in a history list. Such a history list of last "positions parked vehicle" may be added to a list of 'favourite parking positions', either automatically or upon user request/confirmation. The navigation device 10 may also keep statistics how often the user parks at the same location or locations located closely to each other. Such "positions parked vehicle" may be automatically added to a list of point of interests (POI). The list of POI's may be organized in different categories, such as 'favourites' or 'parking points'. The history list may also be a dynamic list of recent "positions parked vehicle".

The stored "positions parked vehicle" may be re-used when the navigation device 10 is used to navigate to a position in the vicinity of an already stored "position parked vehicle". This decreases the route set up time. Also, the user will be guided to parking places he/she is already familiar with, so the user finds his/her parking place and/or his/her parked vehicle more easily.

This may also help to navigate back to one of the previous parking places if the user has forgotten something and/or needs to go there again. If this parking place is new for the driver, there is a high probability that he/she won't find that place a second time without such a history list of "positions parked vehicle".

While specific embodiments of the invention have been described above, it will be appreciated that the invention may be practiced otherwise than as described. For example, the invention may take the form of a computer program containing one or more sequences of machine-readable instructions describing a method as disclosed above, or a data storage medium (e.g. semiconductor memory, magnetic or optical disk) having such a computer program stored therein. It will be understood by a skilled person that all software components may also be formed as hardware components.

The descriptions above are intended to be illustrative, not limiting. Thus, it will be apparent to one skilled in the art that modifications may be made to the invention as described without departing from the scope of the claims set out below.

## Claims

1. A portable navigation device comprising a processor unit (11), a memory device (12, 13, 14, 15) and a positioning device (23), the processor being arranged to communicate with the memory device and the positioning device and wherein the navigation device (10) is further arranged to
- detect parking of a vehicle, and, when parking is detected,
- determine information regarding the position of the parked vehicle using the positioning device, and
- store the information regarding the position of the parked vehicle in the memory device, **characterized in that**
the navigation device is arranged to detect parking of a vehicle by analysing positional data as measured by the positioning device and comparing said positional data with map data stored in the memory device.

2. Navigation device according to claim 1, wherein the positioning device (23) uses at least one of a global navigation satellite system (GNSS), such as global positioning satellite system (GPS) to determine information regarding the position of the navigation device (10).

3. Navigation device according to any preceding claim, wherein the navigation device (10) analyses the positional data as measured by the positioning device (23) to detect parking of a vehicle by analysing at least one of: the speed of the navigation device (10), the amount of bends, the sharpness of bends.

4. Navigation device according to any preceding claim, wherein determining and storing information regarding the position of the parked vehicle using the positioning device (23) is at least partially done after parking of a vehicle is detected.

5. Navigation device according to any preceding claim, wherein the positioning device (23) comprises at least one of: accelerometer, gyroscope, inertia sensor.

6. Navigation device according to any preceding claim, wherein the navigation device (10) is arranged to
- retrieve the stored information regarding the position of the parked vehicle from the memory device (12, 13, 14, 15) and provide navigational instructions from a current position to the position of the parked vehicle.

7. Navigation device according to any one of the preceding claims, wherein the navigation device (10) is arranged to
- store the information regarding the position of the parked vehicle in a history list, comprising a plurality of "positions parked vehicle".

8. Method for storing the position of a parked vehicle, comprising:
- detecting parking of a vehicle, and, when parking is detected,
- determining information regarding the position of the parked vehicle, and
- storing the information regarding the position of the parked vehicle,
**characterized in that**
the detecting parking of a vehicle is performed by analysing positional data as measured by the positioning device and comparing said positional data with map data stored in the memory device..

9. Method according to claim 8, further comprising
- retrieving the stored information regarding the position of the parked vehicle and
- providing navigational instructions from a current position to the position of the parked vehicle.

10. Computer program, when loaded on a computer arrangement, arranged to perform the method according to any one of the claims8-9.

11. Data carrier, comprising a computer program according to claim 10.

## Patentansprüche

1. Tragbare Navigationsvorrichtung, umfassend eine Prozessoreinheit (11), eine Speichervorrichtung (12, 13, 14, 15) und eine Positionsbestimmungsvorrichtung (23), wobei der Prozessor dazu eingerichtet ist, um mit der Speichervorrichtung und der Positionsbestimmungsvorrichtung zu kommunizieren, und wobei die Navigationsvorrichtung (10) ferner eingerichtet ist zum:
- Erfassen des Parkens eines Fahrzeugs, und wenn das Parken erfasst ist,
- Bestimmen von Informationen über die Position des geparkten Fahrzeugs unter Verwendung der Positionsbestimmungsvorrichtung, und
- Speichern der Informationen über die Position des geparkten Fahrzeugs in der Speichervorrichtung,
**dadurch gekennzeichnet, dass** die Navigationsvorrichtung eingerichtet ist, um das Parken eines Fahrzeugs durch Analysieren von Positionsdaten, wie sie von der Positionsbestimmungsvorrichtung gemessen werden, und Vergleichen der Positionsdaten mit Kartendaten, die in der Speichervorrichtung gespeichert sind, zu erfassen.

2. Navigationsvorrichtung nach Anspruch 1, wobei die Positionsbestimmungsvorrichtung (23) mindestens ein globales Navigations-Satellitensystem (GNSS), wie etwa das globale Positionsbestimmungs-Satellitensystem (GPS), verwendet, um Informationen über die Position der Navigationsvorrichtung (10) zu bestimmen.

3. Navigationsvorrichtung nach einem der vorhergehenden Ansprüche, wobei die Navigationsvorrichtung (10) die Positionsdaten analysiert, wie sie von der Positionsbestimmungsvorrichtung (23) gemessen werden, um das Parken eines Fahrzeugs durch Analysieren mindestens eines von: der Geschwindigkeit der Navigationsvorrichtung (10), der Anzahl von Kurven, der Ausgeprägtheit der Kurven zu erfassen.

4. Navigationsvorrichtung nach einem der vorhergehenden Ansprüche, wobei das Bestimmen und Speichern von Informationen über die Position des geparkten Fahrzeugs unter Verwendung der Positionsbestimmungsvorrichtung (23) mindestens teilweise erfolgt, nachdem das Parken eines Fahrzeugs erfasst wurde.

5. Navigationsvorrichtung nach einem der vorhergehenden Ansprüche, wobei die Positionsbestimmungsvorrichtung (23) mindestens eines umfasst von: Beschleunigungsmesser, Gyroskop, Trägheitssensor.

6. Navigationsvorrichtung nach einem der vorhergehenden Ansprüche, wobei die Navigationsvorrichtung (10) eingerichtet ist zum:
- Abrufen der gespeicherten Informationen über die Position des geparkten Fahrzeugs aus der Speichervorrichtung (12, 13, 14, 15) und Bereitstellen von Navigationsanweisungen von einer aktuellen Position bis zu einer Position des geparkten Fahrzeugs.

7. Navigationsvorrichtung nach einem der vorhergehenden Ansprüche, wobei die Navigationsvorrichtung (10) eingerichtet ist zum:
- Speichern der Informationen über die Position des geparkten Fahrzeugs in einer Historienliste, die eine Vielzahl von "Fahrzeugparkpositionen" umfasst.

8. Verfahren zum Speichern der Position eines geparkten Fahrzeugs, umfassend folgende Schritte:
- Erfassen des Parkens eines Fahrzeugs, und wenn das Parken erfasst ist,
- Bestimmen von Informationen über die Position des geparkten Fahrzeugs, und
- Speichern der Informationen über die Position des geparkten Fahrzeugs,
**dadurch gekennzeichnet, dass** das Erfassen des Parkens eines Fahrzeugs durch Analysieren von Positionsdaten, wie sie von der Positionsbestimmungsvorrichtung gemessen werden, und durch Vergleichen der Positionsdaten mit Kartendaten, die in der Speichervorrichtung gespeichert sind, erfolgt.

9. Verfahren nach Anspruch 8, ferner umfassend folgende Schritte:
- Abrufen der gespeicherten Informationen über die Position des geparkten Fahrzeugs, und
- Bereitstellen von Navigationsanweisungen von einer aktuellen Position bis zu einer Position des geparkten Fahrzeugs.

10. Computerprogramm, das, wenn es auf eine Computeranordnung geladen ist, dazu eingerichtet ist, um das Verfahren nach einem der Ansprüche 8 bis 9 auszuführen.

11. Datenträger, umfassend ein Computerprogramm nach Anspruch 10.

## Revendications

1. Dispositif de navigation portable comprenant une unité de processeur (11), un dispositif de mémoire (12, 13, 14, 15) et un dispositif de localisation (23), le processeur étant agencé pour communiquer avec le dispositif de mémoire et le dispositif de localisation et dans lequel le dispositif de navigation (10) est en outre agencé pour :
- détecter un stationnement d'un véhicule, et, lorsqu'un stationnement est détecté,
- déterminer des informations concernant la position du véhicule en stationnement en utilisant le dispositif de localisation, et
- stocker les informations concernant la position du véhicule en stationnement dans le dispositif de mémoire, **caractérisé en ce que**
le dispositif de navigation est agencé pour détecter un stationnement d'un véhicule en analysant des données positionnelles telles qu'elles sont mesurées par le dispositif de localisation et en comparant lesdites données positionnelles à des données cartographiques stockées dans le dispositif de mémoire.

2. Dispositif de navigation selon la revendication 1, dans lequel le dispositif de localisation (23) utilise au moins une géolocalisation et navigation par un système de satellites (« global navigation satellite system » ou GNSS), telle que le système mondial de localisation (« global positioning system » ou GPS) pour déterminer des informations concernant la position du dispositif de navigation (10).

3. Dispositif de navigation selon une quelconque revendication précédente, dans lequel le dispositif de navigation (10) analyse les données positionnelles telles qu'elles sont mesurées par le dispositif de localisation (23) pour détecter un stationnement d'un véhicule en analysant au moins un élément parmi : la vitesse du dispositif de navigation (10), la quantité de braquages, l'acuité de braquages.

4. Dispositif de navigation selon une quelconque revendication précédente, dans lequel les faits de déterminer et de stocker des informations concernant la position du véhicule en stationnement en utilisant le dispositif de localisation (23) sont au moins partiellement réalisés après qu'un stationnement d'un véhicule est détecté.

5. Dispositif de navigation selon une quelconque revendication précédente, dans lequel le dispositif de localisation (23) comprend au moins un élément parmi : un accéléromètre, un gyroscope, un capteur d'inertie.

6. Dispositif de navigation selon une quelconque revendication précédente, dans lequel le dispositif de navigation (10) est agencé pour
- récupérer les informations stockées concernant la position du véhicule en stationnement à partir du dispositif de mémoire (12, 13, 14, 15) et fournir des instructions de navigation d'une position actuelle à la position du véhicule en stationnement.

7. Dispositif de navigation selon une quelconque des revendications précédentes, dans lequel le dispositif de navigation (10) est agencé pour
- stocker les informations concernant la position du véhicule en stationnement dans une liste historique, comprenant une pluralité de « positions de véhicule en stationnement ».

8. Procédé pour stocker la position d'un véhicule en stationnement, comprenant les étapes consistant à :
- détecter un stationnement d'un véhicule, et, lorsqu'un stationnement est détecté,
- déterminer des informations concernant la position du véhicule en stationnement, et
- stocker les informations concernant la position du véhicule en stationnement,
**caractérisé en ce que**
l'étape consistant à détecter un stationnement d'un véhicule est réalisée en analysant des données positionnelles telles qu'elles sont mesurées par le dispositif de localisation et en comparant lesdites données positionnelles à des données cartographiques stockées dans le dispositif de mémoire.

9. Procédé selon la revendication 8, comprenant en outre les étapes consistant à :
- récupérer les informations stockées concernant la position du véhicule en stationnement, et
- fournir des instructions de navigation d'une position actuelle à la position du véhicule en stationnement.

10. Programme d'ordinateur, lorsqu'il est chargé sur un agencement d'ordinateur, agencé pour réaliser le procédé selon une quelconque des revendications 8 et 9.

11. Support de données, comprenant un programme d'ordinateur selon la revendication 10.
